# EUROPEAN PATENT SPECIFICATION

(11) **EP 2 522 884 B1**
(45) Date of publication and mention of the grant of the patent: **22.03.2017**
(21) Application number: 12167227.3
(22) Date of filing: 09.05.2012
(51) Int. Cl.: F16H 61/32

(54) **Actuation apparatus and method**
Betätigungsvorrichtung und Verfahren
Appareil et procédé d'actionnement

(30) Priority: 09.05.2011 GB 201107680
(43) Date of publication of application: 14.11.2012
(73) Proprietor: Nissan Motor Manufacturing (UK) Ltd., Cranfield Bedfordshire MK43 0DB (GB)
(72) Inventor: Villatoro, Fernando, Cranfield, Bedfordshire, MK43 ODB (GB); Alonso, Marcos, Cranfield, Bedfordshire, MK43 ODB (GB)

(56) References cited:
- EP-A2- 1 167 837
- AT-A1- 507 732
- DE-A1- 19 539 472
- FR-A1- 2 855 109

## Description

The present invention relates to actuation apparatus for a manual transmission, in particular, but not exclusively, for a manual transmission used in a vehicle. The invention also relates to a method for selecting a gear in a manual transmission.

In some vehicles having a manual transmission, the gear shift experienced by the driver is unattractive. The amount of effort required by the user to make the gear selection, for at least some gearshifts, makes the shift "feel" unpleasant. The amount of force required to select a gear is determined by the gear being selected and the vehicle operating conditions, such as the vehicle speed. Thus when selecting a gear, the "feel" of the shift can vary noticeably, with some shifts having a less attractive feel than other types of shift.

The trend of replacing larger vehicle engines with smaller turbo-charged engines with larger torque outputs encourages use of smaller gear boxes with larger inertial clutches. Typically, gear box synchronising capacity has to be increased, while reducing the component size. This often negatively affects the feel of the shift for the driver.

A prior art actuation apparatus for a manual transmission is known from FR-A-2855109, which discloses a gear lever which provides electrical signals to actuator assemblies mounted on a gearbox. This arrangement may render the vehicle unable to select gears in the event of electrical failure.

A shift-assisting device for a transmission with a mechanical linkage between the gear lever and the gear selector is known from EP-A-1167837.

Accordingly, the invention seeks to mitigate at least one of the afore-mentioned problems. According to one aspect of the invention, there is provided an actuation apparatus for a manual transmission, said apparatus including a manual gearshift mechanism having a manually operable input member, such as a shift lever, arranged to enable a user to make gear selections; and an actuator assembly for communicating an input force applied to the input member to a gear selector device; the actuator assembly providing a mechanical linkage between the input member and the gear selector device; drive means arranged to load the manual gearshift mechanism; and control means, such as an electronic control means, for controlling operation of the drive means, said control means being arranged to control the output of the drive means to control the input force required to operate the input member when a user selects a gear; wherein the control means is arranged to operate the drive means to provide at least one of power assisted movement to the input member and powered resistance to movement of the input member, according to a control algorithm; characterized in that the control means is arranged to control the drive means such that the input force required to operate the input member is substantially the same for each gearshift.

The invention controls the force required to operate the input member, and thereby controls the "feel" of the gearshift that the user experiences through the input member.

Thus the "feel" of the gearshift is isolated, to some extent, from the operating conditions of the vehicle.

As the control means is arranged to control the output of the drive means such that the input force required to operate the input member is substantially the same for each gearshift, the user has to apply substantially the same force to the shift lever for any gearshift, whether selecting low, high or reverse gears. This provides a substantially consistent shift experience for the user regardless of the gear that is selected.

The gear selector device is mounted between a first gear element and a second gear element, and is movable into and out of engagement with the first and second gear elements according to the operation of the input member. The first and second gear elements are rotatably mounted on a shaft. The arrangement is such that when the selector device engages the gear element, the gear element is locked for rotation with the shaft. When the gear element is not selected, the gear element rotates relative to the shaft. Typically the gear selector device includes a shift collar, for example a synchromesh shift collar.

The actuator assembly provides a mechanical linkage between the input member and the gear selector device; and therefore provides a load path therebetween.

The power assisted movement and/or the powered resistance to movement of the input member can be provided to the input member directly; or indirectly via the actuator assembly. The control means adjusts the output of the drive means in response to the user operating the input member.

Advantageously, the apparatus can include sensing means for sensing at least one of the following parameters: output of the drive means; axial position of part of the manual gearshift device; rotational orientation of part of the manual gearshift device; the force applied to the actuator assembly and/or the input member; temperature; vehicle speed; and the current gear selected; and the control means is arranged to control operation of the drive means according to data received from the sensing means. Furthermore, the control means can be arranged to estimate the next gear to be selected according to inputs received from the sensing means.

Advantageously, the actuator assembly includes an actuator member; and the sensing means is arranged to sense the axial position and rotational orientation of the actuator member.

Advantageously, the control means can be arranged to determine the force applied to the input member during a shift; and the control means is also arranged to determine a target force for the user to apply to the input member. The control means may be arranged to calculate the load to be applied to the input member in order to reach the target force. The control means may be arranged to control the output of the drive means to reach the target force. The drive means may be arranged to load the actuator assembly, and the load may be communicated to the input member via the actuator assembly. Thus the control means determines the load to be applied to the actuator assembly, and the direction of the load, in order to reach the target force; and controls the drive means accordingly. Advantageously, the control means is arranged to determine when the target force is reached, for example from the output of the sensing means.

Advantageously, the actuator assembly can include at least one actuator member having a longitudinal axis, with the drive means arranged to load the actuator member to move in at least one axial direction.

Advantageously, the actuator assembly can include at least one shift rod having a shift fork mounted thereon, wherein the shift rod is operably connected to the input member and is arranged to communicate load between the input member and the gear selector device via the shift fork. Advantageously, the actuator assembly can include a plurality of shift rods. Typically, a shift rod is provided for each pair of gears.

Advantageously, the actuator assembly can include a striking rod that is operably connected to the input member and is arranged to communicate load between the input member and the or each shift rod and/or the or each shift fork via a linkage. Thus the striking rod is an actuator member that acts as an extension of the input member to actuate gear selections. The striking rod is arranged for limited axial movement in response to forward and reverse movement of the input member. The striking rod moves axially in response to the input member selecting a gear. The striking rod is arranged for limited rotational movement in response to sideways movement of the input member. The striking rod rotates about its longitudinal axis in response to movement of the input member along a neutral line across the gearshift pattern. The linkage is arranged to selectively drivingly engage the shift rods and/or shift forks according to the rotational orientation of the striking rod. When a shift rod and/or shift fork is drivingly engaged by the linkage, load can be transmitted between an associated gear selector device and the input member.

Advantageously, the drive means can be positioned to drive at least one of the striking rod, shift rod, shift forks, and linkage. The drive means can also be positioned to drive the input member. The drive means can include at least one motor device. For example, the motor device can comprise a linear motor or a rotary electric motor.

Advantageously, the control system includes selection means arranged to enable a user to select from a plurality of shift modes. The invention is then able to provide different levels of powered resistance or power assistance, according to a driver's preference. For example, the selection means can be arranged to enable a user to select between shift modes that provide: standard assistance/resistance to movement of the input member, high assistance/resistance to movement of the input member, and low assistance/resistance to movement of the input member. The level of power assistance/resistance for each shift is calculated according to the shift mode selected. Advantageously the selection means includes at least one selection device such as a button, dial or switch. Additionally, or alternatively, the selection means can include a touch sensitive screen that provides a graphical interface with the control means.

In a preferred embodiment, the drive means is arranged to load the actuator assembly, and the load is communicated to the input member via the actuator assembly. For example, when providing power assistance to the input member, the drive means applies a load to the actuator assembly substantially in the direction of movement of the actuator assembly. When providing resistance to movement of the input member, the drive means applies a load to the actuator assembly in a direction that is substantially opposite to the direction of movement of the actuator assembly.

Advantageously, the drive means is arranged to drive the actuator member in either axial direction. The direction selected is determined by the control means in accordance with the control algorithm. Advantageously, the actuator member can include a striking rod. Advantageously, the actuator member can include a shift rod.

Advantageously, the drive means can include a rotatable output member, and the drive means includes means for converting rotational movement of the output member to translational movement of the actuator assembly.

According to another aspect of the invention, there is provided a method for selecting a gear in a manual transmission, said method including providing actuation apparatus according to any of the above paragraphs, including a manual gearshift mechanism having a manually operable input member for making gear selections and an actuator assembly for communicating an input force applied to the input member to a gear selector device; loading the manual gearshift mechanism using drive means; and adjusting the output of the drive means to control the input force required to operate the input member when a user selects a gear; and including controlling the drive means such that the input force required to operate the input member is substantially the same for each gearshift.

Advantageously, the method can include estimating the next gear to be selected according to inputs received from sensor means.

The method can include providing actuation apparatus according to any configuration described herein.

The method can include determining the force applied to the input member by the user.

The method can include calculating a target force for the user to apply to the input member.

The method can include determining at least one vehicle parameter and calculating the target force according to the at least one vehicle parameter. Preferably the method includes determining a plurality of vehicle parameters and calculating the target force according to the plurality of vehicle parameters. The or each vehicle parameter can be obtained, for example by sensing means. The vehicle parameter can be measured directly or can be determined by measuring another parameter, and calculating the vehicle parameter on the basis of the measured parameter and a known relationship between the measured parameter and the desired vehicle parameter.

The method can include calculating the required increase, or decrease, in force in order to reach the target force.

The method can include controlling the output of the drive means to reach the target force.

According to another aspect of the invention, there is provided a transmission including the actuation apparatus according to any configuration described herein, and/or adapted to use a method according to any selection of steps described herein.

According to another aspect of the invention, there is provided a drivetrain for a vehicle including apparatus according to any configuration described herein, and/or adapted to use a method according to any selection of steps described herein.

According to another aspect of the invention, there is provided a vehicle including apparatus according to any configuration described herein, and/or adapted to use a method according to any selection of steps described herein.

An embodiment of the invention will now be described, by way of example only, with reference to the accompanying drawings, in which:
Figure 1 is a diagrammatic representation of apparatus for actuating a manual transmission in accordance with the invention;
Figure 2 is a plan view of part of the manual transmission of Figure 1;
Figure 3 is an isometric view of part of the transmission of Figure 1;
Figure 4 shows an arrangement of slots for controlling the movement of a gear lever;
Figures 5a and 5b show graphs of shift effort vs. gear knob (top of shift lever) displacement for unassisted gear selections;
Figure 5c shows a graph of shift effort vs. gear knob (top of shift lever) displacement for assisted gearshifts; and
Figure 6 shows a graph of shift effort vs. gear knob (top of shift lever) displacement for assisted shifts, for a plurality of different shift profiles.

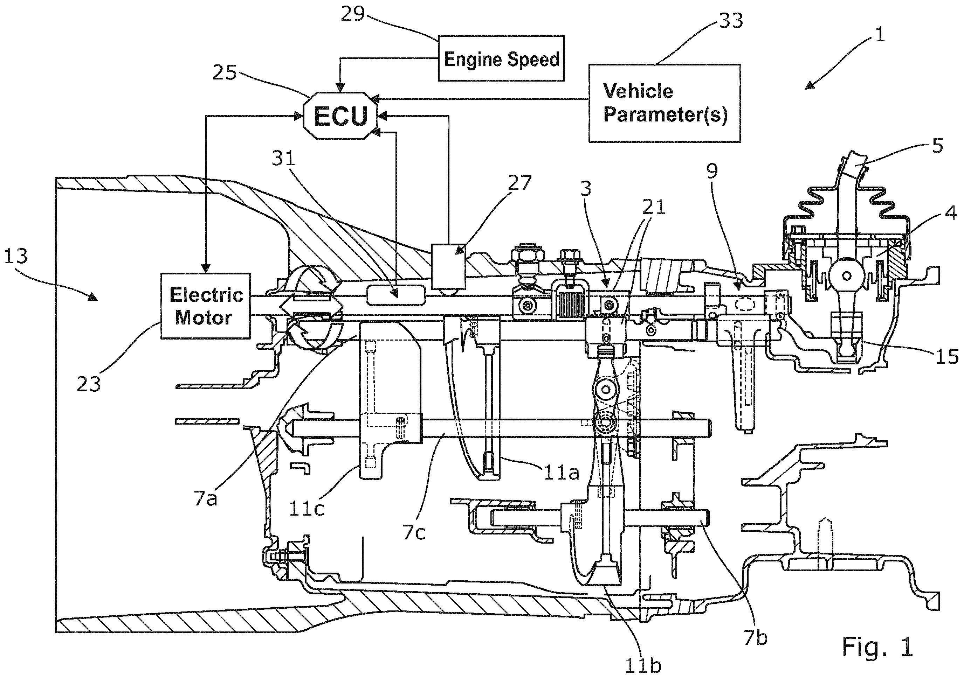

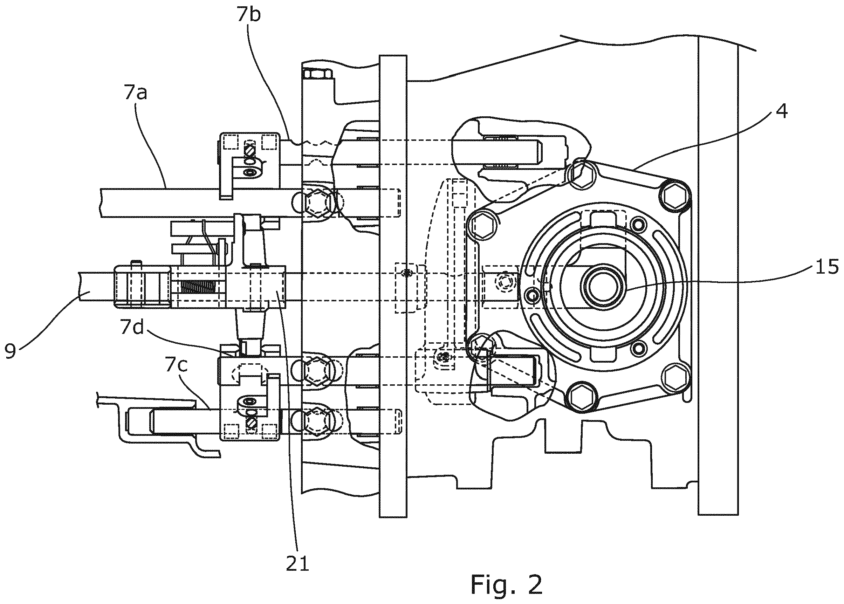

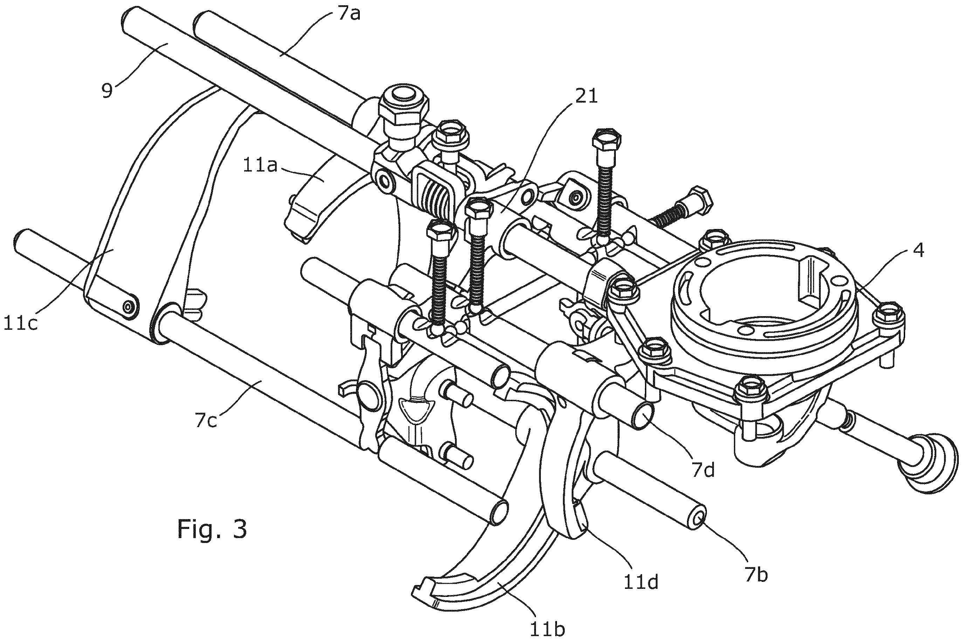

Figures 1 to 3 show part of a six-speed manual transmission 1 that includes an apparatus 3 for manually selecting gears. In Figures 1 to 3 the gears and synchromesh selector assemblies have been omitted for clarity.

The apparatus 3 for manually selecting gears includes a gear lever 5, first, second, third and fourth shift rods 7a-d, a striking rod 9, and first, second, third and fourth shift forks 11a-d. The transmission further includes a drive system 13 for selectively loading the apparatus 3 for manually selecting gears thereby controlling the input force that a user has to apply to the gear lever 5 in order to select a gear.

The first shift fork 11a is mounted on the first shift rod 7a and is arranged to actuate a first synchromesh shift collar to selectively engage 1^{st} and 2^{nd} gears. The second shift fork 11b is mounted on the second shift rod 7b and is arranged to actuate a second synchromesh shift collar to selectively engage 3^{rd} and 4^{th} gears. The third shift fork 11c is mounted on the third shift rod 7c and is arranged to actuate a third synchromesh shift collar to selectively engage 5^{th} and 6^{th} gears. The fourth shift fork 11d is mounted on the fourth shift rod 7d, and is arranged to actuate a fourth synchromesh shift collar to selectively engage reverse gear.

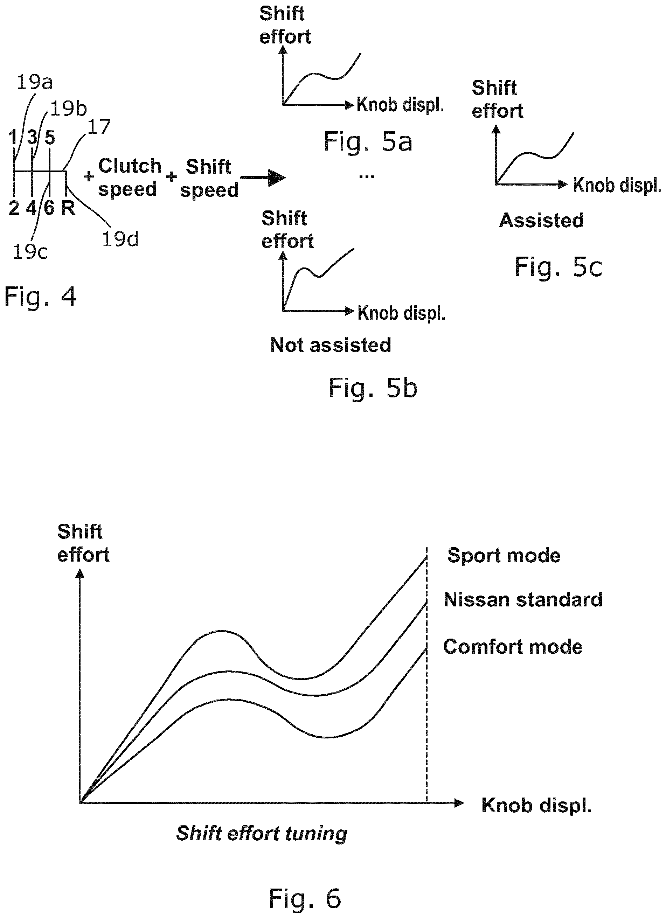

The gear lever 5 is pivotally mounted in a support 4, and is arranged to move in accordance with a conventional slotted "H" type configuration to select 1^{st} to 6^{th} gears and reverse (see Figure 4a). The gear lever 5 is connected to the striking rod 9 via a coupling 15. The coupling 15 rotates the striking rod 9 about the striking rod's longitudinal axis when the user moves the lever 5 within a neutral slot 17 (see Figure 4a) and moves the striking rod 9 axially when the user moves the lever 5 into a gear slot 19a-d.

The striking rod 9 has drive linkages 21 connected thereto that are arranged to selectively engage the shift rods 7a-d according to the rotational orientation of the striking rod 9 and hence the position of the lever 5.

Movement of the gear lever 5 within the neutral slot 17 enables the user to select between the first to the fourth shift rods 7a-d by aligning the lever 5 with the associated gear slots 19a-d. For example, when the gear lever 5 is moved within the neutral slot 17 such that it is aligned with the 1^{st}-2^{nd} slot 19a, this causes the striking rod 9 to rotate the drive linkage 21 into driving engagement with the first shift rod 7a. When the user selects first gear by moving the lever 5 along slot 19a, the coupling 15 drives the striking rod 9 in a first axial direction. This causes the drive linkage 21 to drive the first shift rod 7a, the first shift fork 11a and the first synchromesh shift collar to move in the first axial direction until the first shift collar engages 1^{st} gear. When 2^{nd} gear is selected, the coupling 15 drives the striking rod 9 in a second axial direction. This causes the drive linkage 21 to drive the first shift rod 7a, the first shift fork 11a and the first shift collar in the second axial direction, until the first shift collar engages 2^{nd} gear.

Selection of 3^{rd} and 4^{th} gears is achieved in a similar manner by aligning the gear lever 5 with the 3^{rd}-4^{th} slot 19b. This causes the striking rod 9 to rotate the driving linkage 21 into driving engagement with the second shift rod 7b. Selecting 5^{th} and 6^{th} gears is achieved by aligning the gear lever 5 with the 5^{th}-6^{th} slot 19c. This causes the striking rod 9 to rotate the driving linkage 21 into driving engagement with the third shift rod 7c. Selecting reverse gear is achieved by aligning the gear lever 5 with the reverse slot 19d. This causes the striking rod 9 to rotate the driving linkage 21 into driving engagement with the fourth shift rod 7d.

Only one of the first to fourth shift rods 7a-d is drivingly engaged by the drive linkage 21 at any one time.

The drive system 13 includes a motor 23 and an Electronic Control Unit (ECU) 25 for controlling operation of the motor 23. The ECU 25 receives data from: a linear and angular position sensor 27 that monitors the axial position and angular orientation of the striking rod 9; a sensor 29 that is arranged to measure the output of the engine, typically the speed of the engine; a force sensor 31 that is arranged to detect the load applied by the vehicle driver to the striking rod 9 and/or the lever 5; and from at least one other sensor 33 that is arranged to measure a vehicle parameter, such as vehicle speed or temperature, for example engine temperature and/or temperature within a transmission housing.

The signals from the angular sensor 27 enable the ECU 25 to determine whether or not the gear lever 5 is aligned with one of the gear slots 19a-d.

The motor 23 is connected to the striking rod 9 such that it can apply a load to the striking rod 9 in at least one axial direction. For example, the motor 23 can comprise a linear motor or the motor 23 can comprise an electric motor that includes a mechanism for converting rotary motion into linear motion, such as a rack and pinion type arrangement. It is preferred that the motor 23 is arranged to load the striking rod 9 in the first and second axial directions.

When the driver selects a gear, the ECU 25 determines the force applied to the striking rod 9, and hence the force applied to the gear lever 5, by the driver, by taking readings from the force sensor(s) 31. The ECU 25 then estimates the driver desired shift depending on vehicle parameter(s) 33 such as vehicle speed, and/or engine speed; estimates the required effort to reduce or increase the effort to reach the target driver effort; and controls operation of the motor 23 to load the striking rod 9 in the appropriate direction to reach the target driver effort. Thus the motor 23 either provides increased resistance to movement of the striking rod 9 or provides power-assisted movement in the direction of movement of the striking rod 9 according to the control algorithm of the ECU 25. Therefore when the user selects a gear, the "feel" of the shift is controlled by the ECU 25. The linear and angular sensor 27 provides feedback to the ECU 25 regarding the linear position and angular orientation of the striking rod 9.

Thus, the ECU 25 controls operation of the motor 23 to assist or to damp the movement of the striking rod 9, and thereby to control the feel of the selection of each gear. When the gear lever 5 is not aligned with one of the gear slots 19a-d, the ECU 25 is programmed not to operate the motor 23. This prevents the motor 23 from trying to load the apparatus 3, when it is not possible to select a gear.

The electronic control unit 25 is programmed to control the output of the motor 23 such that the feel of each gearshift is substantially the same regardless of the gear being selected and the vehicle operating conditions. For example, in manual transmissions in the prior art, the force required to change gear between lower gears can vary from the force required to change gear between higher gears. The ECU 25 is typically arranged to assist or resist the movement of the striking rod 9, and hence the gear lever 5, in order to provide a substantially more consistent feel when selecting any of the gears, regardless of the vehicle engine speed and/or the vehicle speed. Thus, the invention effectively isolates the gearshift feel from the operating conditions of the vehicle, to provide a substantially consistent gearshifting experience for the driver for all gear selections.

Figures 5a to 5c contrast the non-assisted condition with the drive assisted condition. In general, in the non-assisted condition, each gearshift has its own force-displacement characteristic, whereas the assisted condition has a single force-displacement characteristic for each shift. Figures 5a and 5b show the same gearchange action taken at different speeds. Figure 5a shows a slow gearchange requiring less force; while Figure 5b shows a faster change requiring more force. The use of power assistance or resistance allows a consistent "feel" for fast and slow changes, as shown in Figure 5c.

Figure 5 illustrates that the ECU 25 can be programmed with a plurality of shift modes wherein each shift mode provides a substantially consistent gear shift feel for every gear selection made under that mode. However, each mode provides a slightly different feel by having its own force-displacement characteristic. For example, when in a sports mode, the driver has to apply a greater force to the gear lever 5 in order to select each of the gears. When selecting a comfort mode, the driver has to apply less effort to the gear lever 5 in order to select each gear. The vehicle can include a button, dial or switch to enable the driver to select between the different modes. Alternatively, the driver can select the modes via a computer interface, such as a touch-sensitive screen or a menu driven system.

It will be apparent to the skilled person that modifications can be made to the above embodiment that fall within the scope of the invention. For example, the dedicated control system can be arranged to receive inputs from an Engine Control Unit, Transmission Control Unit, or any other suitable vehicle system, for example via a vehicle CAN-bus.

While the invention is described with reference to a six-speed transmission, it will be apparent to the skilled person that the invention is applicable to manual transmissions having any number of gear ratios.

In the above embodiment, the drive system 13 is arranged to act on the striking rod 9 in order to control the input force that a user has to apply to the gear lever 5 in order to select a gear. However, the drive system 13 can be arranged to act on other parts of the apparatus for selecting a gear 3, such as on each of the shift rods 7a-d. For example, separate motors can be arranged to act on each of the first to fourth shift rods 7a-d. Additionally, or alternatively, the drive system 13 can be arranged to act on the shift forks 11a-d, the gear lever 5 and/or any other suitable linkage between the gear lever 5 and the shift forks 11a-d.

Some manual transmissions do not include a striking rod 9 but rather the lower end of the gear lever, or some intermediate linkage, is arranged to selectively engage each of the shift rods to move them according to the operational position of the gear lever. The invention is also applicable to this arrangement of manual transmission, since the drive system can be applied to the shift rods, to the gear lever, or to an intermediate linkage, as mentioned above.

## Claims

1. Actuation apparatus (3) for a manual transmission (1), said apparatus including
a manual gearshift mechanism having a manually operable input member (5) arranged to enable a user to make gear selections; and an actuator assembly (13) for communicating an input force applied to the input member (5) to a gear selector device (11a-11d), the actuator assembly providing a mechanical linkage between the input member and the gear selector device;
drive means (23) arranged to load the manual gearshift mechanism; and
control means (25) for controlling operation of the drive means (23), said control means (25) being arranged to control the output of the drive means (23) to control the input force required to operate the input member (5) when a user selects a gear;
wherein the control means (25) is arranged to operate the drive means (23) to provide at least one of power assisted movement to the input member (5) and powered resistance to movement of the input member (5), according to a control algorithm; **characterized in that**:
the control means (25) is arranged to control the drive means (23) such that the input force required to operate the input member (5) is substantially the same for each gearshift.

2. Apparatus (3) according to claim 1, including sensing means (27, 29, 31, 33) for sensing at least one of the following parameters: output of the drive means (23); axial position of part (9) of the manual gearshift mechanism; rotational orientation of part (9) of the manual gearshift mechanism; the force applied to the input member (5) and/or actuator assembly (13); temperature; vehicle speed; and the current gear selected; wherein the control means (25) is arranged to control operation of the drive means (23) according to data received from the sensing means (27, 29, 31, 33); and wherein the control means (25) is arranged to estimate the next gear to be selected according to inputs received from the sensing means (27, 29, 31, 33).

3. Apparatus (3) according to claim 1 or claim 2, wherein the control means (25) is arranged to determine the force applied to the input member (5) during a shift; and the control means (25) is also arranged to determine a target force for the user to apply to the input member (5).

4. Apparatus (3) according to claim 3, wherein the control means (25) is arranged to calculate the load to be applied to the gear shift mechanism in order to reach the target force.

5. Apparatus (3) according to claim 4, wherein the control means (25) is arranged to control the output of the drive means (23) to reach the target force.

6. Apparatus (3) according to any one of the preceding claims, wherein the drive means (23) is arranged to load the actuator assembly (13), and the load is communicated to the input member (5) via the actuator assembly (13).

7. Apparatus (3) according to claim 6, wherein the actuator assembly (13) includes at least one actuator member having a longitudinal axis, and the drive means (23) is arranged to load the actuator member to move in at least one axial direction.

8. Apparatus (3) according to any one of the preceding claims, wherein the actuator assembly (13) includes at least one shift rod (7a-7d) having a shift fork (11a-11d) mounted thereon, wherein the shift rod (7a-7d) is operably connected to the input member (5) and is arranged to communicate load between the input member and the gear selector device via the shift fork (11a-11d).

9. Apparatus (3) according to claim 8, wherein the actuator assembly (13) includes a striking rod (9) that is operably connected to the input member (5) and is arranged to communicate load between the input member and the or each shift rod (7a-7d) and/or the or each shift fork (11a-11d) via a linkage.

10. Apparatus (3) according to claim 9, wherein the drive means (23) is positioned to drive at least one of the striking rod (9), shift rods (7a-7d), shift forks (11a-11d) and linkage.

11. Apparatus (3) according to any one of the preceding claims, wherein the drive means (23) is positioned to drive the input member (5).

12. Apparatus (3) according to any one of the preceding claims, including selection means arranged to enable a user to select from a plurality of shift modes.

13. A method for selecting a gear in a manual transmission (1), said method including:
providing actuation apparatus (3) according to any one of claims 1 to 12 including a manual gearshift mechanism having a manually operable input member (5) for making gear selections, and an actuator assembly (13) for communicating an input force applied to the input member (5) to a gear selector device (11a-11d);
loading the manual gearshift mechanism using drive means (23);
adjusting the output of the drive means (23) to control the input force required to operate the input member (5) when a user selects a gear;
and including controlling the drive means (23) such that the input force required to operate the input member (5) is substantially the same for each gearshift.

14. A method according to claim 13, including estimating the next gear to be selected according to inputs received from sensor means (27, 29, 31, 33).

15. A vehicle including apparatus (3) according to any one of claims 1 to 12 and/or adapted to use a method of claim 13 or claim 14.

## Patentansprüche

1. Betätigungsvorrichtung (3) für ein Schaltgetriebe (1), wobei die Vorrichtung Folgendes enthält:
einen Schaltgetriebemechanismus mit einer manuell zu betätigenden Eingangseinheit (5), angeordnet, es einem Benutzer zu ermöglichen, Gangwahlvorgänge durchzuführen; und eine Aktoranordnung (13) zum Kommunizieren einer auf die Eingangseinheit (5) aufgebrachten Eingangskraft auf eine Gangwahlvorrichtung (11a-11d), wobei die Aktoranordnung eine mechanische Verbindung zwischen der Eingangseinheit und der Gangwahlvorrichtung bereitstellt;
Antriebsmittel (23), angeordnet, den Schaltgetriebemechanismus zu belasten; und
Steuermittel (25) zum Steuern des Betriebs des Antriebsmittels (23), wobei die Steuermittel (25) angeordnet sind, die Ausgangsleistung des Antriebsmittels (23) zu steuern, um die zum Betätigen der Eingangseinheit (5) erforderliche Eingangskraft, wenn ein Benutzer einen Gang wählt, zu steuern;
wobei das Steuermittel (25) angeordnet ist, das Antriebsmittel (23) zu betätigen, um je nach Steueralgorithmus eine unterstützte Bewegung der Eingangseinheit (5) und/oder einen unterstützten Widerstand für die Bewegung der Eingangseinheit (5) bereitzustellen; **dadurch gekennzeichnet, dass**:
das Steuermittel (25) angeordnet ist, das Antriebsmittel (23) derart zu steuern, dass die zum Betreiben der Eingangseinheit (5) erforderliche Eingangskraft für jeden Gangwechsel im Wesentlichen dieselbe ist.

2. Vorrichtung (3) nach Anspruch 1, Sensormittel (27, 29, 31, 33) enthaltend, um wenigstens einen der folgenden Parameter zu messen: Ausgangsleistung des Antriebsmittels (23); Axialposition eines Teils (9) des Schaltgetriebemechanismus; Drehausrichtung eines Teils (9) des Schaltgetriebemechanismus; die auf die Eingangseinheit (5) und/oder die Aktoranordnung (13) aufgebrachte Kraft; Temperatur; Fahrzeuggeschwindigkeit; und den gegenwärtig gewählten Gang; wobei das Steuermittel (25) angeordnet ist, den Betrieb des Antriebsmittels (23) im Einklang mit von den Sensormitteln (27, 29, 31, 33) empfangenen Daten zu steuern; und wobei das Steuermittel (25) angeordnet ist, den nächsten zu wählenden Gang auf der Grundlage von von den Sensormitteln (27, 29, 31, 33) empfangenen Eingaben abzuschätzen.

3. Vorrichtung (3) nach Anspruch 1 oder 2, wobei das Steuermittel (25) angeordnet ist, die bei einem Schaltvorgang auf die Eingangseinheit (5) aufgebrachte Kraft zu bestimmen; und das Steuermittel (25) ebenfalls angeordnet ist, eine Zielkraft zu bestimmen, die der Benutzer auf die Eingangseinheit (5) aufbringen muss.

4. Vorrichtung (3) nach Anspruch 3, wobei das Steuermittel (25) angeordnet ist, die Last zu bestimmen, die auf den Schaltmechanismus aufzubringen ist, um die Zielkraft zu erreichen.

5. Vorrichtung (3) nach Anspruch 4, wobei das Steuermittel (25) angeordnet ist, die Ausgangsleistung des Antriebsmittels (23) zu steuern, um die Zielkraft zu erreichen.

6. Vorrichtung (3) nach einem der vorhergehenden Ansprüche, wobei das Antriebsmittel (23) angeordnet ist, die Aktoranordnung (13) zu belasten, und die Last über die Aktoranordnung (13) an die Eingangseinheit (5) kommuniziert wird.

7. Vorrichtung (3) nach Anspruch 6, wobei die Aktoranordnung (13) wenigstens ein Aktorelement mit einer Längsachse enthält und das Antriebsmittel (23) angeordnet ist, das Aktorelement zu belasten, um sich in wenigstens einer axialen Richtung zu bewegen.

8. Vorrichtung (3) nach einem der vorhergehenden Ansprüche, wobei die Aktoranordnung (13) wenigstens eine Schaltstange (7a-7d) mit einer darauf befestigten Schaltgabel (11 a-11 d) enthält, wobei die Schaltstange (7a-7d) mit der Eingangseinheit (5) wirkverbunden ist und angeordnet ist, über die Schaltgabel (11a-11d) Last zwischen der Eingangseinheit und der Gangwahlvorrichtung zu kommunizieren.

9. Vorrichtung (3) nach Anspruch 8, wobei die Aktoranordnung (13) einen Schaltstab (9) enthält, der mit der Eingangseinheit (5) wirkverbunden ist und angeordnet ist, über ein Gestänge Last zwischen der Eingangseinheit und der oder jeder Schaltstange (7a-7d) und/oder der oder jeder Schaltgabel (11a-11d) zu kommunizieren.

10. Vorrichtung (3) nach Anspruch 9, wobei das Antriebsmittel (23) angeordnet ist, den Schaltstab (9), die Schaltstangen (7a-7d), die Schaltgabeln (11a-11d) und/oder das Gestänge anzutreiben.

11. Vorrichtung (3) nach einem der vorhergehenden Ansprüche, wobei das Antriebsmittel (23) angeordnet ist, die Eingangseinheit (5) anzutreiben.

12. Vorrichtung (3) nach einem der vorhergehenden Ansprüche, einschließlich Auswahlmittel, angeordnet, es einem Benutzer zu ermöglichen, aus mehreren Schaltmodi auszuwählen.

13. Verfahren zum Auswählen eines Gangs in einem Schaltgetriebe (1), wobei das Verfahren Folgendes enthält:
Bereitstellen einer Betätigungsvorrichtung (3) nach einem der Ansprüche 1 bis 12, einschließlich eines Schaltgetriebemechanismus mit einer manuell zu betätigenden Eingangseinheit (5), um Gangwahlvorgänge durchzuführen, und einer Aktoranordnung (13), um eine auf die Eingangseinheit (5) aufgebrachte Eingangskraft an eine Gangwahlvorrichtung (11a-11d) zu kommunizieren;
Belasten des Schaltgetriebemechanismus unter Einsatz von Antriebsmitteln (23);
Einstellen der Ausgangsleistung des Antriebsmittels (23), um die Eingangskraft zu steuern, die erforderlich ist, um die Eingangseinheit (5) zu betätigen, wenn ein Benutzer einen Gang auswählt;
und das Steuern des Antriebsmittels (23) derart enthaltend, dass die erforderliche Eingangskraft zum Betätigen der Eingangseinheit (5) für jeden Gangwechsel im Wesentlichen dieselbe ist.

14. Verfahren nach Anspruch 13, einschließlich Abschätzen des nächsten zu wählenden Gangs auf der Grundlage von von dem Sensormittel (27, 29, 31, 33) empfangenen Eingaben.

15. Fahrzeug, einschließlich Vorrichtung (3) nach einem der Ansprüche 1 bis 12 und/oder angepasst, ein Verfahren nach Anspruch 13 oder 14 zu verwenden.

## Revendications

1. Appareil d'actionnement (3) pour une transmission manuelle (1), ledit appareil comportant
un mécanisme de changement de vitesse manuel ayant un organe d'entrée exploitable manuellement (5) agencé pour permettre à un utilisateur d'effectuer des sélections de vitesse ; et un ensemble actionneur (13) pour communiquer une force d'entrée appliquée à l'organe d'entrée (5) à un dispositif sélecteur de vitesse (11a à 11d), l'ensemble actionneur assurant une tringlerie mécanique entre l'organe d'entrée et le dispositif sélecteur de vitesse ;
un moyen d'entraînement (23) agencé pour charger le mécanisme de changement de vitesse manuel ; et
un moyen de commande (25) pour commander le fonctionnement du moyen d'entraînement (23), ledit moyen de commande (25) étant agencé pour commander la sortie du moyen d'entraînement (23) afin de commander la force d'entrée requise pour exploiter l'organe d'entrée (5) lorsqu'un utilisateur sélectionne une vitesse ;
dans lequel le moyen de commande (25) est agencé pour exploiter le moyen d'entraînement (23) afin de fournir au moins l'un d'un mouvement assisté à l'organe d'entrée (5) et d'une résistance alimentée à un mouvement de l'organe d'entrée (5), selon un algorithme de commande ; **caractérisé en ce que** :
le moyen de commande (25) est agencé pour commander le moyen d'entraînement (23), de sorte que la force d'entrée requise pour exploiter l'organe d'entrée (5) soit sensiblement la même pour chaque changement de vitesse.

2. Appareil (3) selon la revendication 1, comportant des moyens de détection (27, 29, 31, 33) pour détecter au moins l'un des paramètres suivants : une sortie du moyen d'entraînement (23) ; une position axiale d'une partie (9) du mécanisme de changement de vitesse manuel ; une orientation de rotation d'une partie (9) du mécanisme de changement de vitesse manuel ; la force appliquée à l'organe d'entrée (5) et/ou à l'ensemble actionneur (13) ; une température ; une vitesse du véhicule ; et la vitesse actuelle sélectionnée ; dans lequel le moyen de commande (25) est agencé pour commander le fonctionnement du moyen d'entraînement (23) selon des données reçues des moyens de détection (27, 29, 31, 33) ; et dans lequel le moyen de commande (25) est agencé pour estimer la prochaine vitesse à sélectionner selon des entrées reçues des moyens de détection (27, 29, 31, 33).

3. Appareil (3) selon la revendication 1 ou la revendication 2, dans lequel le moyen de commande (25) est agencé pour déterminer la force appliquée à l'organe d'entrée (5) pendant un changement de vitesse ; et le moyen de commande (25) est également agencé pour déterminer une force cible pour que l'utilisateur l'applique à l'organe d'entrée (5).

4. Appareil (3) selon la revendication 3, dans lequel le moyen de commande (25) est agencé pour calculer la charge à appliquer au mécanisme de changement de vitesse afin d'atteindre la force cible.

5. Appareil (3) selon la revendication 4, dans lequel le moyen de commande (25) est agencé pour commander la sortie du moyen d'entraînement (23) afin d'atteindre la force cible.

6. Appareil (3) selon l'une quelconque des revendications précédentes, dans lequel le moyen d'entraînement (23) est agencé pour charger l'ensemble actionneur (13), et la charge est communiquée à l'organe d'entrée (5) par l'intermédiaire de l'ensemble actionneur (13).

7. Appareil (3) selon la revendication 6, dans lequel l'ensemble actionneur (13) comporte au moins un organe actionneur ayant un axe longitudinal, et le moyen d'entraînement (23) est agencé pour charger l'organe actionneur pour un mouvement dans au moins une direction axiale.

8. Appareil (3) selon l'une quelconque des revendications précédentes, dans lequel l'ensemble actionneur (13) comporte au moins une tringle de changement de vitesse (7a à 7d) ayant une fourchette de changement de vitesse (11a à 11d) montée dessus, dans lequel la tringle de changement de vitesse (7a à 7d) est raccordée fonctionnellement à l'organe d'entrée (5) et est agencée pour communiquer une charge entre l'organe d'entrée et le dispositif sélecteur de vitesse par l'intermédiaire de la fourchette de changement de vitesse (11a à 11d).

9. Appareil (3) selon la revendication 8, dans lequel l'ensemble actionneur (13) comporte une tringle de transmission (9) qui est raccordée fonctionnellement à l'organe d'entrée (5) et est agencée pour communiquer une charge entre l'organe d'entrée et la ou chaque tringle de changement de vitesse (7a à 7d) et/ou la ou chaque fourchette de changement de vitesse (11a à 11d) par l'intermédiaire d'une tringlerie.

10. Appareil (3) selon la revendication 9, dans lequel le moyen d'entraînement (23) est positionné pour entraîner au moins l'une de la tringle de transmission (9), des tringles de changement de vitesse (7a à 7d), des fourchettes de changement de vitesse (11a à 11d) et de la tringlerie.

11. Appareil (3) selon l'une quelconque des revendications précédentes, dans lequel le moyen d'entraînement (23) est positionné pour entraîner l'organe d'entrée (5).

12. Appareil (3) selon l'une quelconque des revendications précédentes, comportant un moyen de sélection agencé pour permettre à un utilisateur de faire une sélection parmi une pluralité de modes de changement de vitesse.

13. Procédé pour sélectionner une vitesse dans une transmission manuelle (1), ledit procédé comportant :
la fourniture d'un appareil d'actionnement (3) selon l'une quelconque des revendications 1 à 12 comportant un mécanisme de changement de vitesse manuel ayant un organe d'entrée exploitable manuellement (5) pour effectuer des sélections de vitesse, et un ensemble actionneur (13) pour communiquer une force d'entrée appliquée à l'organe d'entrée (5) à un dispositif sélecteur de vitesse (11a à 11d) ;
le chargement du mécanisme de changement de vitesse manuel en utilisant un moyen d'entraînement (23) ;
l'ajustement de la sortie du moyen d'entraînement (23) pour commander la force d'entrée requise pour exploiter l'organe d'entrée (5) lorsqu'un utilisateur sélectionne une vitesse ;
et comportant la commande du moyen d'entraînement (23), de sorte que la force d'entrée requise pour exploiter l'organe d'entrée (5) soit sensiblement la même pour chaque changement de vitesse.

14. Procédé selon la revendication 13, comportant l'estimation de la prochaine vitesse à sélectionner selon des entrées reçues de moyens de capteur (27, 29, 31, 33).

15. Véhicule comportant l'appareil (3) selon l'une quelconque des revendications 1 à 12 et/ou adapté pour utiliser un procédé de la revendication 13 ou de la revendication 14.
